# EUROPEAN PATENT APPLICATION

(11) **EP 3 107 319 A1**
(43) Date of publication of application: **21.12.2016**
(21) Application number: 15172553.8
(22) Date of filing: 17.06.2015
(51) Int. Cl.: H04W 4/20

(54) **USER NETWORK SYSTEM WITH SELECTIVE USER FACET CONNECTIONS**

(71) Applicant: Facetts, a French Société par Actions Simplifiée, 35108 Rennes Cedex 3 (FR)
(72) Inventor: Facetts, a French Société par Actions Simplifiée, 35108 Rennes Cedex 3 (FR)
(74) Representative: Le Forestier, Eric

(57) **Abstract**

A user network system allows establishing one-to-one or group connections between users and comprises a plurality of client devices associated with respective users (Um) and a network server accessible by said client devices for allowing communications between users.

The system comprises:
- network management means at said network server,
- means for generating and storing user facets (Fmn) containing selected user features defined user-by-user,
- means for associating to each user facet a unique facet ID,
- means for linking each facet ID of a given user with a corresponding unique user ID at said network management means in a non-traceable manner for users,
- means for initiating and establishing connections between users only through said user facets (Fmn) and said facet IDs.

Associated methods and instructions are also disclosed.

The present invention provides high flexibility and efficiency for creating and managing network connections, with full control on what is disclosed or not or the network.

## Description

### Field of the Invention

The present invention relates to a communication system enabling people, places and objects (the users) to discover, engage and exchange information, while preserving the information exposure according to the user's intent.

### Background of the invention

The present invention relates to communication services and social networks mechanisms that offer means for users to communicate with each other by rich text, voice, image, video and more.

In such system, users generally have an identifier that is associated to user's specific information such as name, profile, location, capabilities and more that define an identity. Most often such means of communication requires that one user has a single identity. Some may allow having several identifiers but does not easily allow handling them in the same application instance. Others applications allow aggregating several identifiers from several such services and social networks but do not allow to manage them in a unified way.

Existing service and social networks are usually too simplistic and do not reflect the real complexity of human social behavior and relations: the disclosure of information is binary (all or nothing), the disclosure of the identity is not reversible, a progressive engagement is not feasible, thus not making them convenient for exchanges with new encounters who may not be fully trusted.

Existing social network solutions aim at creating social transparency as much as possible, and this does not balance well with the need for privacy, for progressive engagement, for limiting access to specific personal information. In a certain manner, they are a caricature of real social interaction, without reflecting the real life interactions between people, where it is natural to adapt one's behavior to the context. For instance, in a professional context, one will not talk about politics or have a casual conversation as it is possible with close friends.

There have been efforts to improve social network architectures.

For instance, US20100312714A1 discloses a multi-facet profile creation, management and sharing over social networks intended to customize relationships between members of a social network based on a multi-facet member profile. However, the system provides for a single user identity and a single basic profile that is segregated into several sub-profiles whose access is restricted to identified relationships.

WO2014039160A1 has a similar disclosure, with one single identity (GUID) per user.

US8010458B2 and US7716140B1 disclose approaches to provide an identified member with the ability to restrict access to some of his/her information based on the relationship with other members. But member identification is always exposed as it constitutes the basis of the relationship. In US7716140B1, a request for relationship information is received from an observer, the request indicating at least a first relationship between a target in a social network and a second entity in the social network, identifying at least a first privacy rule for the first relationship, and outputting at least part of the relationship information to the observer if the first privacy rule is satisfied.

US8010458B2 discloses a system and a method for managing information flow between members of an online social network, where the members control who may view their personal information and who may communicate with them.

US6269369B1 discloses a network-computer-based personal contact manager system wherein users of networked clients maintain and update a set of user information which is stored in a relational database on a network server. The personal contact manager system allows each user to specify on an individual basis which of their contacts are permitted to access respective datums of their user information.

US20140250174A1 discloses a temporary, location-based social network architecture.

Finally, US20120047565 A1 discloses systems and methods creating social connections based on a narrowcasting beacon and crowd-matching.

### Summary of the invention

The present invention aims at providing an architecture for true multi-identity communications between users, much like the real-life experience.

It further aims at providing great flexibility and efficiency in generating network connections between users while effectively controlling what information is disclosed for the purpose of connection establishment, in generating truly independent social networks and in joining and leaving such networks.

The present invention thus provides a user network system, the network being for establishing one-to-one or group connections between users, comprising a plurality of client devices associated with respective users and a network server accessible by said client devices for allowing communications between users, characterised in that it comprises:
- network management means at said network server,
- means for generating and storing user facets containing selected user features defined user-by-user,
- means for associating to each user facet a unique facet ID,
- means for linking each facet ID of a given user with a corresponding unique user ID at said network management means in a non-traceable manner for users,
- means for initiating and establishing connections between users only through said user facets and said facet IDs.

Certain preferred but non-limiting aspects of the present invention include the following features, taken individually or in any combinations that the skilled person will assess as being technically compatible:
* the system further comprises facet discovery means for selectively exposing a given facet to the client devices of other users for the purpose of establishing connections between user facets.
* the system further comprises means for creating minimal content user facets with predefined facet features.
* the system further comprises means for selectively associating to a given user facet to be discovered context-based information derived from existing connections of the associated user with other users in external connection systems.
* said facet discovery means comprise means for broadcasting a selected facet to locally connected client devices.
* the system further comprises means provided at said network management means for allocating spare facet IDs to users and providing them to associated client devices, and means provided in said client devices for off-line generation of a facet using a spare facet ID.
* the system further comprises means for establishing facet connections between locally-connected client devices, and means for synchronizing facet connection data with said network management means when said devices are later connected to said network server.
* the system further comprises facet connection management means allowing a given user to request the switching of an established connection between one the associated user facets and another user's facet to a connection between another of said associated user facets and said another user's facet.
* the system further comprises storing in said another user's client device connection history information including information associated with the removed connection between said one the associated user facets and said another user's facet.
* said facet connection management means further comprise means for grouping connections between two facets associated to one same user with another user facet to only one of said two facets only.
* said facet connection management means further comprise means allowing a given user currently connected through one facet to another user's facet to request a new connection with said another user's facet through another facet associated with said given user, said request containing context information including the existence of said current connection.
* said facet connection management means further comprise means allowing a given user, receiving a connection request on one facet of said given user from another user's facet, to request a connection with said another user's facet through another facet associated with said given user.
* the system further comprises browser-based means for connecting to said network server and creating a server-managed, unregistered facet for selective connection with other users facets via a browser.
* the system further comprises means for establishing location-based connections between user facets associated with a plurality of client devices and a beacon facet of another client device to the vicinity of which said plurality of client devices are located, and means for broadcasting messages from said beacon facet to the user facets having location-based connection therewith.
* the system further means for generating temporary user facets for the purpose of ephemeral instant messaging, and means for deleting exchanged messages with a temporary user facet in response to facet deletion.

According to other aspects, the present invention covers a server, a client device or any sub-system implementing corresponding parts of the above system. The present invention also covers any corresponding methods and sets of program instructions at system level, server level or client level, as well as downloadable software packages containing such instructions.

### Brief description of the drawings

Other aims, aspects and advantages of the present invention will appear more clearly from the following detailed description of preferred embodiments thereof, given by way of non-limiting examples and with reference to the appended drawings, in which:
Figure 1 illustrates the general architecture of a system according to this invention,
Figure 2 illustrates a plurality of facets associated to a given user,
Figure 3 illustrates facet connections between user-associated facets,
Figure 4 is an interaction sequence diagram illustrating facet generation,
Figure 5 shows an exemplary data structure for use in this invention,
Figure 6 shows multiple facet connections made possible with the present invention,
Figure 7 illustrates the variability of facet features content from a connection to another,
Figure 8 is an interaction sequence diagram illustrating facet disclosure,
Figure 9 is an interaction sequence diagram illustrating basic facet connection establishment,
Figure 10 is an interaction sequence diagram illustrating the exchange of messages between connected facets,
Figures 11-13 are interaction sequence diagrams illustrating three respective facet discovery processes in nearby mode,
Figures 14-16 are interaction sequence diagrams illustrating three respective context-enhanced facet discovery modes,
Figure 17 is an interaction sequence diagram illustrating nearby mode facet connection while clients are connected to server,
Figure 18 is an interaction sequence diagram illustrating a connection recommendation process,
Figure 19 and 20 illustrate facet connection states before and after a facet promotion process is performed,
Figure 21 illustrates facet connection states before and after a facet join-promotion process is performed,
Figure 22 illustrates facet connection states before and after a facet duplicate-promotion process is performed,
Figure 23 is an interaction sequence diagram illustrating the combination of a connection establishment and a facet promotion,
Figures 24-26 are interaction sequence diagram respectively illustrating facet generation, facet connection and facet disclosure in off-line, nearby communications mode,
Figure 27 is a timeline showing how facet connections between two users can change over time, based on the mechanisms of the invention, and
Figure 28 is an interaction sequence diagram illustrating guest access to the system.

### Detailed Description of preferred embodiments

As a preliminary note, the same reference signs will be used for designating the same or similar components or features along the description, as far as possible.

Besides, all text contained in the appended drawings should be considered as belonging to the present description.

### A) System and facet overview

The present invention is based on a system comprising client devices having application software executed thereon (e.g. mobile phones, tablets, a PCs, a set top boxes, etc.), and a server system having server software executing specific tasks.

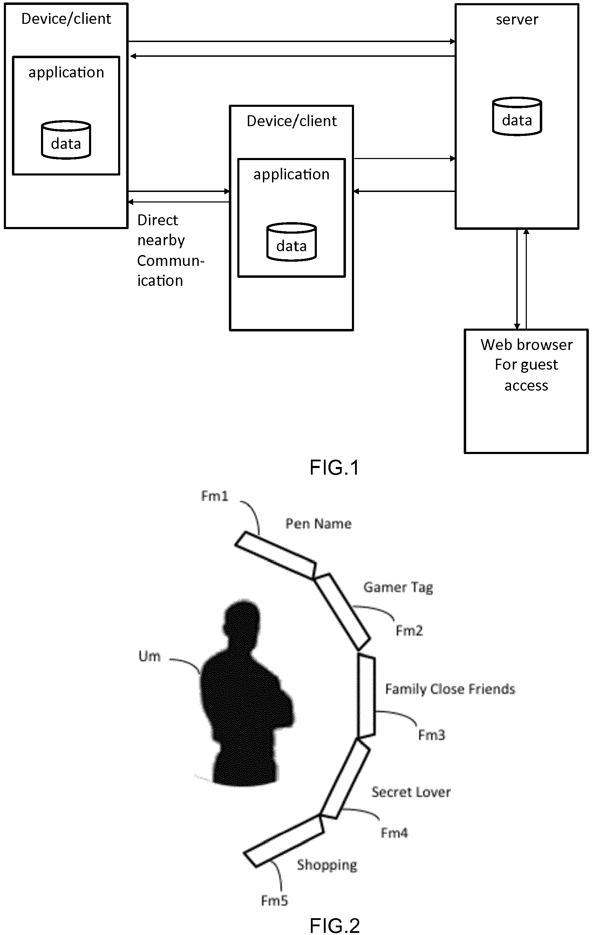

Figure 1 shows a high level service architecture of an application installed on a client device communicating with the server system.

The application runs on a client device and can call one or several servers that maintain information and data and perform some centralized functions.

As will be described, the client device also saves information and data.

Device to device direct communication is also possible using available communication means embarked in the devices.

One purpose of the system of the invention is to allow a user to manage (e.g. create, maintain, update, enhance, expose, share, destroy...) multiple online identities, just like people may naturally be doing in regular life (multiple personas, i.e. appearances presented to the external world, for the same individual). Having multiple online identities allows the end user to vary social engagement depending on context, isolate these identities from each other but still build reputation and network with each of them.

Figure 2 shows an abstract of an individual (user Um) exposing a set of facets or personae, Fm1, ..., Fmn (in this case five facets), each facet being isolated from each other from the network usage standpoint.

A facet represents one user online identity. A user can create and store a facet to communicate with a particular purpose, e.g. a Pen Name or Gamer Tag. Any number of facets can be generated, anytime a user thinks it is needed for a given context of communication.

Each facet Fmn constitutes a handle toward the actual user Um who created the facet, and provides a means to expose in a controlled manner certain personal data to others users. Each facet can have a connection with other facets from other users. This connection can be shifted from one facet to another facet of the same user as will be described.

The facets Fmn of a user Um remains independent from each other as seen from other users, who cannot determine or deduce that two facets relate to the same user. Facets provide thus and easy means for someone to share a specific handle and related personal information content while preserving other facets

Each facet is defined in the system by its own and unique ID (FIDmn of fid in certain Figures) which constitutes the only handle for interaction within the system.

Although each user Um also has a personal identifier UIDm (or uid in certain Figures) allowing the connecting of the various facet IDs at server level, the user ID UIDm is never shared nor exposed to other users.

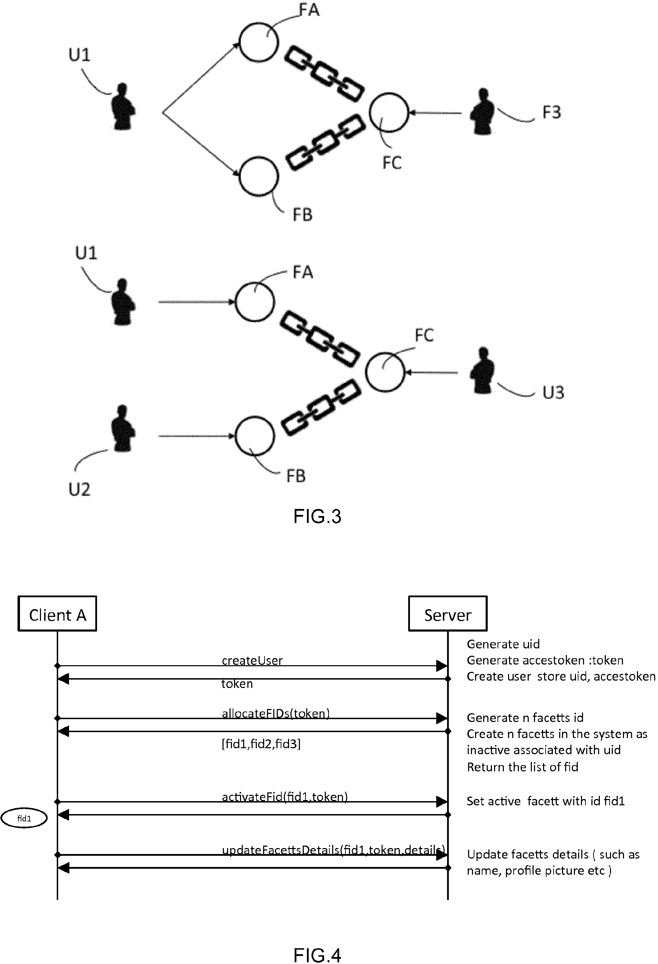

Each facet ID is generated independently using state of art global unique identifier technics, and there is no mathematical link or dependency between a user ID and a facet ID as well as between two facets IDs. It is therefore not possible to infer that a given facet ID belongs to a given user, nor is it possible to infer that two facets belong to the same user or to two different ones. Thus, as illustrated in Figure 3, as seen from facet FC of user U3, it is impossible to determine if facets FA and FB connected thereto correspond to the same user U1 (as shown in the top of the Figure), or to different users U1 and U2 (as shown in the bottom of the Figure), as the user IDs are not used for facet connection.

### B) Facet generation

The generation of a new facet is simple and fast. A facet can be created with the client device application:
- from scratch, by entering new features to be displayed in the facet and visibility settings,
- by transferring features already contained in existing facets of the same user,
- or by duplicating and modifying a an existing facet of the same user.

To generate a new facet, the client application requires a new facet ID for use by the system. However the generation of new facet does not require the server system to be accessible for providing a new facet ID: in a preferred embodiment, each user client device is being pre-allocated a number of ready-to-use facet identifiers available on the device. Thus the client device does not need to be connected to the system to allow the generation of a new facet.

Once generated, the new facet can be used in the client application to e.g. build new connection, expose a new set of user features with different visibility settings from other facets, build reputation, share content (status, posts, timeline), or have new one-to-one or group discussions.

Figure 4 shows an example of a token-based interaction between a client device Client A and the server for facet generation. The language contained in this Figure should be considered as belonging to the present description.

### C) Facet features

Users in the system are only exposed to each other through their facets. A user may use a single facet or as many facets as he sees fit. He can be associated with other users through one or several facets, each facet exposing facet-specific features.

A feature is a named property with a value (that can be of any type: text, image, video, animated drawing, etc.) and one among several visibility settings, for example:
- visible to anyone,
- visible only to established connections,
- visible only to other users in the same geographical area,
- visible in a given discovery mode (cf. infra),
- visible to other users of the same group/association of users,
- visible to users having with same property.

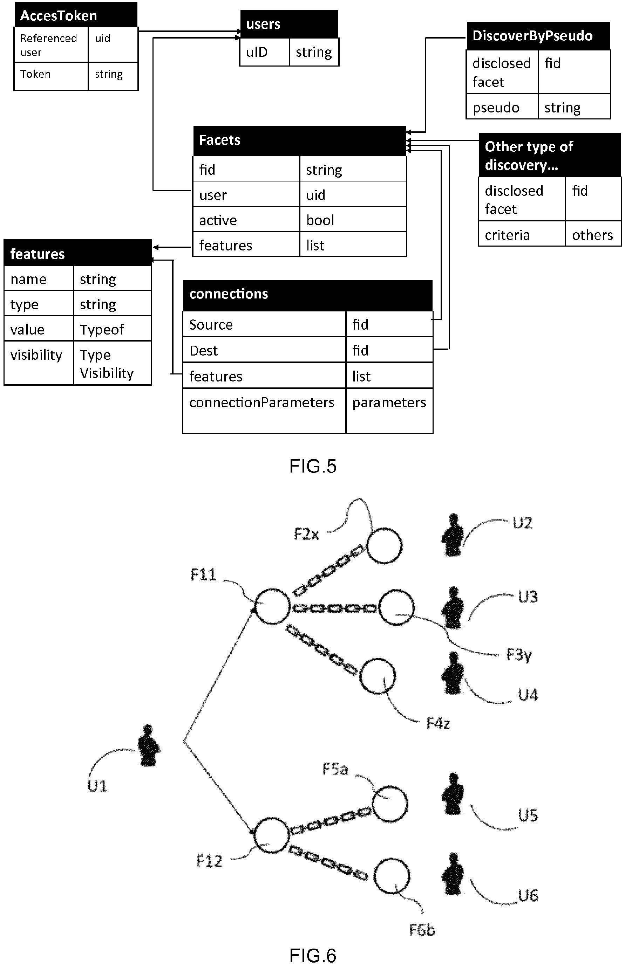

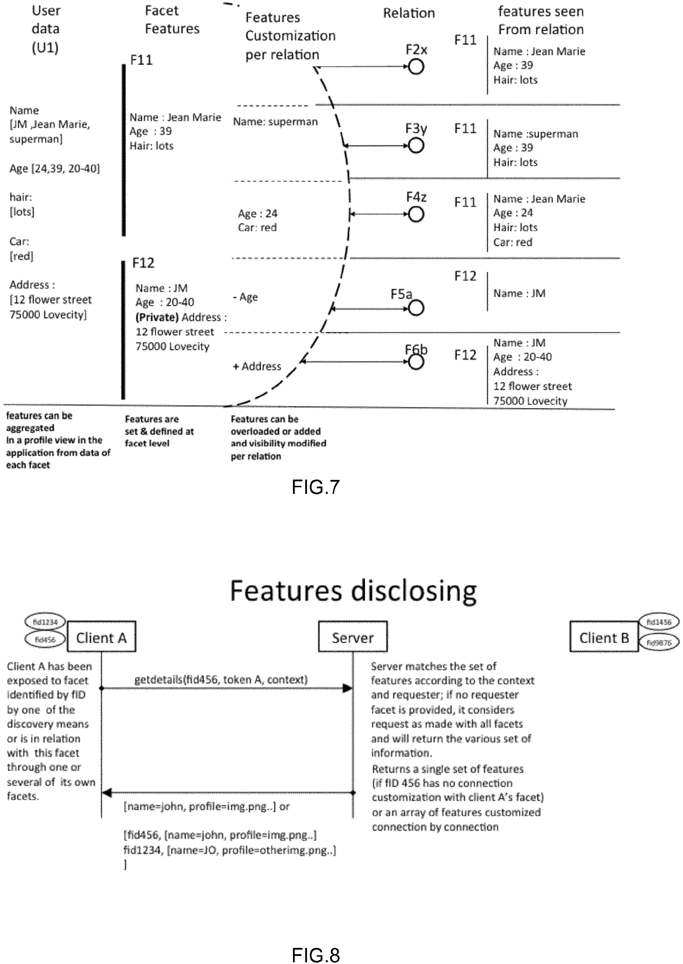

Figure 5 shows an exemplary data structure for use in the invention. Figure 6 shows an exemplary facet connection arrangement for a number of users, and Figure 7 illustrates the customized content of different facets corresponding to one same user in this arrangement, again by way of example.

Features visibility and values of a given facet may also be overridden with the visibility and values which are also set by the same user but specific to the connection. For instance and as shown in Figure 7, a normally visible feature (e.g. age for facet F12) can be masked as viewed from the other facet of this connection (customization '- Age'), or a normally non-visible feature (e.g. address, which is labeled 'Private' i.e. non-visible in facet F12) can be made visible as viewed from the other facet of this connection (customization '+ Address').

This allows for example to customize features constituting a profile picture, for a special event or permanently.

Figure 8 illustrates how a facet such as those on the right part of Figure 7 seeks and obtains the features associated with a facet such as F11, F12 in the same Figure.

### D) Facet enhancement

Users can use their client device application to generate, add, modify or remove at will any features and any visibility settings that are exposed by any given facets. All connections that are associated with this facet are then affected by such changes.

The application can highlight to the other users having a connected facet the changes made to a facet, especially those that may introduce possible confusion such as name changes, visual display changes, etc.

Also previously exposed features of a facet may be kept by the application on the client, to allow the user to manage the full trust chain of the relation.

### E) Facet connection establishment and facet interaction

Facets are basically private and unless the user has exposed one of his facets through one of the discovery mechanisms described below, it cannot be used to interact with other users.

A user can, through one of his/her facets, discover other users' facets by means of one among a plurality of different facet discovery processes, as will be described in the following.

Once a facet of a given user is discovered, the other user is able to see all or part of the facet features, subject to the visibility settings associated with the discovery context, according to the interactions shown in Figure 8.

Said other user (requester) may then initiate a connection request exposing one its facets to said given user (requestee). A connection request basically expects from the requestee facet whether said given user agrees to the establishment of the connection.

At that stage the requestee is also able to see the requester facet features, subject to the visibility settings. Both users are notified the connection establishment status.

The connection request may contains additional context information, preferably verified and/or authenticated information about the requester, to help the requestee make its decision about connecting to the requester or not, and start building trust on the requester.

For example, such context may include the following information:
- the fact that the two facets have been in nearby range of each other (determined by short-range connectivity as described later) at a given date and time,
- the fact that the two facets are in a common group, or in a common chat,
- the fact that the requester knows the phone number of the requestee (and both expose a valid phone number),
- the fact that the requester and the requestee are already connected to each other through a given social network or through an alternative communication network.

Following the request, the requestee may agrees on the connection, deny it, ignore it or ask for addition information to ensure the exposed facet of the requester can be trusted or is consistent with the information provided.

In particular, if the requestee is not able to decide based on the connection request context, the system preferably comprises means controlled by the server for opening a dedicated communications channel allowing the requestee to ask for additional information to the requester (e.g. answer to a specific question by text message, request for some sample voice, initiate voice/video communication) to validate that the requester is indeed the person he/she pretends, while still preserving both identities and personal information.

In a basic embodiment, any party can revoke a connection at any time unilaterally.

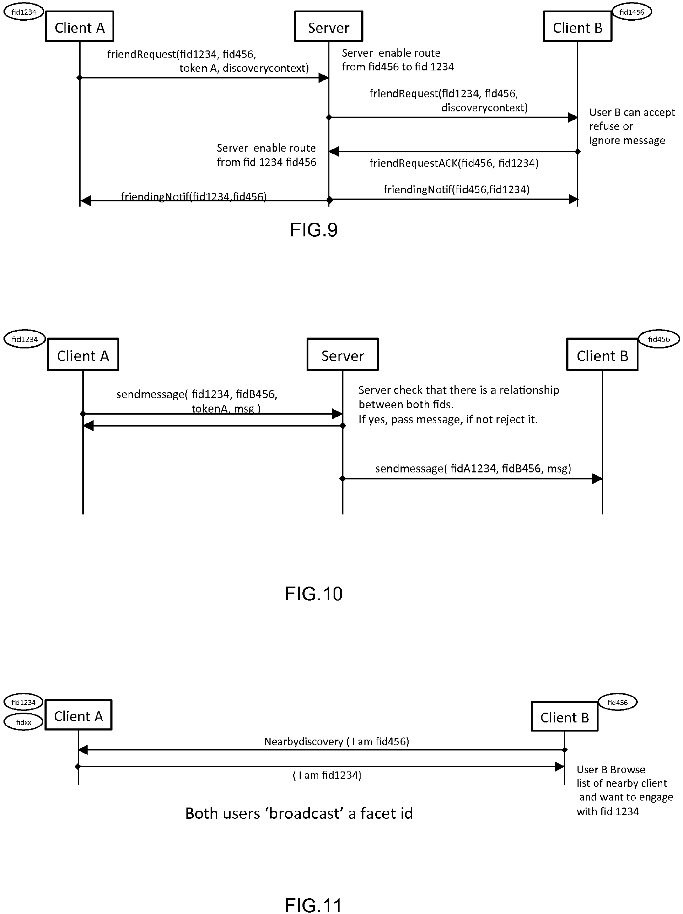

Figure 9 illustrates the interactions between Client A (the requester client device), server and Client B (the requestee client device) for the purpose of establishing facet connection therebetween.

### F) Facet communication

The system enables rich communication services between facets, and provides many ways for users to interact with each other.

### a) Direct communication

The system provides state of art rich communication between users, such as via text messages, rich text messages, pictures, short videos, animated movies, audio records, location, etc. It also allows initiating voice and video calls between facets using state of the art VoIP techniques.

As part of the features and configuration of a facet, a user can decide which communication medium/media he can be engaged with. For example a given facet may or may not accept audio/video incoming calls. This configuration can be set at the facet level or at the facet-to-facet connection level.

When the recipient of a message is not connected, the server buffers the message until the recipient reconnects, and may use a third party notification mechanism, such as Apple® notification or Android® notification to inform the user that a new message is waiting for him/her.

It is further possible for a user to specify a feature that indicates if he/she wishes of not to receive such notifications.

Figure 10 illustrates the basic exchanges between Client A and Client B via the server for the purpose of message transmission.

Moreover each user can define different settings to customize communications and e.g.:
- authorize/deny specific communication modes at a given moment of the day,
- manage when/how notifications can be received,
- customize the notifications for a specific connected facet, or a specific unconnected facet.

### b) Direct communication between unconnected facets

Some degree of communication between unconnected facets is also possible, but with appropriate restrictions. A user may for example set auto-blocking settings, where messages from a given unconnected facet are limited to a maximum of X messages without reply (i.e. after the Xth message has been sent, message transmission from the same unconnected face is blocked until at least one answer is sent by the recipient).

### c) Group Chat

Each facet can be associated with one of several group chats. A group chat is a chat functionality involving several facets, where each interaction is transmitted to every facet registered to the group. A group chat can be:
- private (i.e. only with connected facets),
- open and discoverable locally (e.g. when the client device of an unconnected facet is in the vicinity of a client device having a facet owning the group chat), or
- open and discoverable globally, based on tag and discovery attributes.

### G) Facet broadcast

### a) Basic broadcast

The application run on a client device can use a radio communication protocol available on the device, such as Bluetooth, Wi-Fi-direct or LTE-direct, to expose one or several facets that can then be received by other applications run on other client devices in receiving range of the radio protocol, thereby achieving nearby facet discovery.

By broadcasting a facet in this manner and collecting facets broadcast by others, a user is able to easily establish connections with people physically interacting with him/her at a given time. This also allows defining a context for future connection or promoting connections, as the application can be designed to collect and store the facet IDs of all users that are in close range via said nearby radio protocol, for use at a later occasion for that purpose. Since both applications collect and store such facet IDs, they are both able to verify that two users have indeed been in close range at an earlier occasion.

This function allows converting a physical encounter into a digital connection in a simple and friendly manner while still letting each user in control of what is exposed to whom.

### b) Silhouette

When one wishes to expose very limited or even no features in a given context, he/she can decide to be exposed as a transparent persona with a minimal-content or zero-content facet, named silhouette, and still be able to see and be seen by other users of the service. This allows for anyone to have the minimal seed to initiate contact other users and start building relationship.

### c) Contextual facet broadcast

The broadcasting of a facet using a nearby communications medium may be achieved in one among several manners:
(i) using a dedicated facet with no specific features such as a silhouette,
(ii) dynamically broadcasting to each nearby facet a facet that the user has previously provided in the same context (e.g. to the same identified and previously-met facet); if no match is identified, then the application exposes the silhouette facet as in (i),
(iii) when both applications are using dynamic broadcasting as in (ii) and it is however not possible to resolve a matching, then having both applications requesting and obtaining from a mediation server respective temporary identifiers, and broadcasting said identifiers, so that each application is capable in cooperation with the server of resolving the matching facet using the knowledge of the server concerning potentially existing connections between facets of these users, thus still safely protecting the facet features of the corresponding users vis-a-vis other nearby users while allowing known contacts to identify each other (with the help of said mediation server); if no match is identified despite this exchange of temporary identifiers, then the application exposes the default silhouette facet as in (i); this

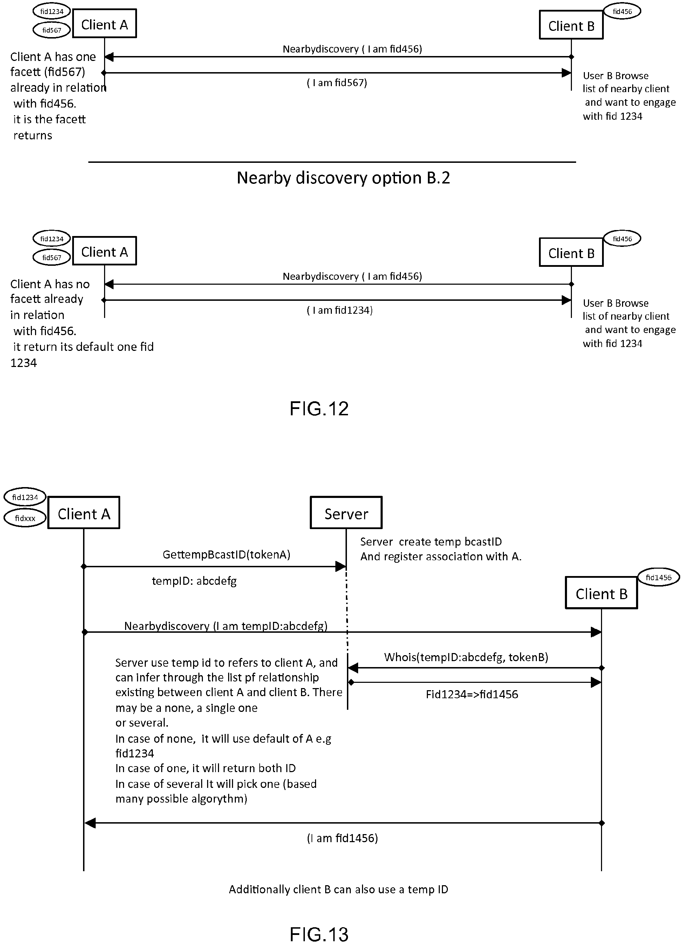

Figures 11, 12 and 13 illustrate exemplary interactions between Client A, server and Client B for implementing above options (i) (Figure 11), (ii) (Figure 12) and a mix of (ii) and (iii) (Figure 13).

### d) Encounter history & statistics

The application or each client device is capable of collecting and storing facets IDs encountered throughout the day using the available radio protocol(s), and can also store context information such as time, location and other meaningful information relating to these encounters.

The application can then compute, store and display global statistics concerning other encountered facets (new facets per day, overall count of different facets encountered, etc.) and more dedicated statistics such as for example how often a given facet is met.

The application can also be designed so as to allow browsing through/filtering encountered facets to help discovering people with sibling interest.

### e) Background Mode

Preferably, the applications can use a radio communication protocol available in their respective client device to broadcast and receive each other's broadcast information also in background mode, or when the client device (smartphone, tablet, etc.) is in sleep mode thus allowing the collection and storage of complete encounter history.

### H) Facet discovery and engagement

Facets can establish a mutual connection through a wide range of discovery mechanisms.
The main principles of the facet system of the instant invention are:
- each facet is private, and unless the user has provided and defined means for making it discoverable (as described elsewhere in this specification), a facet is not exposed, and only the other facets that have been provided appropriate information or which are connected thereto can interact with it,
- any discovery and establishment of a connection requires that a facet owner on the requestee side is asked to agree on the establishment of a connection initiated by the facet owner on the requester side.

A non-exhaustive list of the possible discovery mechanisms is as follows.

### a) Discovery based on existing phone number relationship

A user can associate a phone number to one or more of his/her facets. The system can they verify via sms or voice call or other means that the user is indeed the current owner of this phone number. The system then registers this number so that it can be searched.

Another user can then discover if some of its contacts-book entries have been registered for lookup in the system. If some are, it proposes for each facet associated with the lookup up phone number to establish one or more new connections.

This allows the application of a requester's client device to send a connection request informing the requestee that the requester facet used for the request has associated thereto a certain phone number and has knowledge of a phone number associated with the requestee's facet to which connection is desired.

The application on the requestee side may additionally (but optionally) verify that the phone number associated with the requester facet is also indeed contained in the contact book of the requestee.

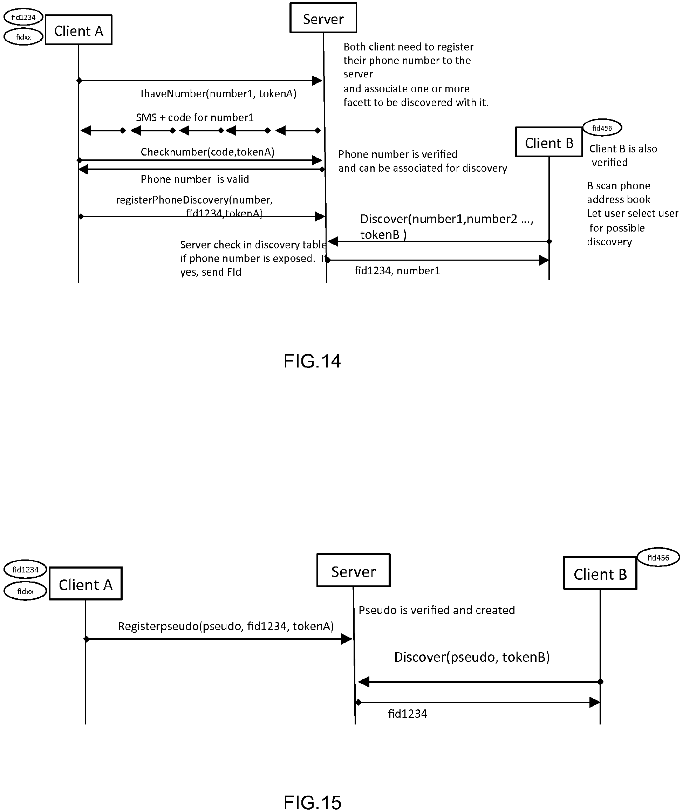

An example of the corresponding interactions is illustrated in Figure 14.

### b) Discovery based on pseudonym lookup

Each user can register in the server one or more pseudonyms to be associated to a facet, for looking up purposes. The user can then communicate this pseudonym by any appropriate means (phone, email, printed message, etc.) to other potential users.

These other users are able to connect to the server which looks up this pseudo to discover the associated facet, and send a connection request.

A possible implementation of this discovery process is shown in Figure 15.

### c) Discovery based on existing connections in third party networks

Users may be already connected through other communication networks or social networks such as Facebook®, whatsapp®, Telegram®, Twitter®, Line®, Google+®, Wechat®, etc.

A user can associate to a facet an identifier of him/her on such a third party network, and this identifier is transmitted to the server and stored therein for lookup purposes. Using an application-programming interface (API) available for the considered network, the server is then capable of determining and indicating from the established relationships in the third party network if a user of the latter network has joined the system of the present invention, i.e. if a username among these established relationships is found in the lookup process.

In the affirmative, it is then possible for the user to propose the establishment of a connection between exposed facets of the both users in the system of the present invention, the request for connection being enriched with his own username in the third party network.

As a practical implementation, the client device application of the instant system can be caused to send a connection request informing the requestee that the requester owns a given identifier in the third party network, and the system then can verify that there is indeed an existing relationship (as both application can verify this established relationship).

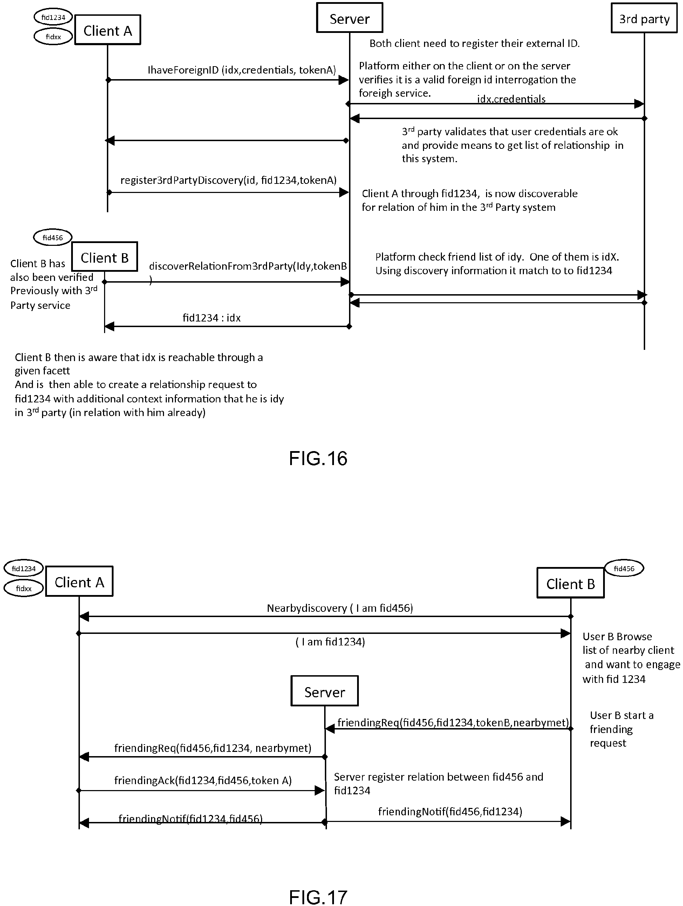

Figure 16 illustrate exemplary interactions between Client A, Client B, server and third-party network for implementing this functionality.

### d) Discovery based on exposed interest/tag/free search on exposed features

In this discovery approach, the client device application allows a user to selectively expose certain facet features as publicly visible and searchable, so that other users can discover facets based on free text search.

The application of said other user's client device can then display a list of matching facets, for the purpose of facet engagement and connection.

### e) Discovery based on current or past close range encounter

As described above in the 'broadcast section', a user's application is capable of detecting other facets that are, or have been in close range, and to allow users to establish connections based on this proximity criterion.

Both requester application and requestee application are capable of ascertaining that the respective facets are/were indeed in close range. The corresponding interactions are illustrated in Figure 17.

### f) Discovery based on recommendation

A given user may propose to one of the facets connected therewith to establish a new connection with a third facet of a third party user. The scenario is as follows:
- facet A has established connections with facet B and with facet C;
- facet A is willing to propose to facet B to connect to facet C;
- the system first asks the user associated with facet C if he agrees that facet A shares facet C's information (the visible part of the facet features) with one of his other connections. On his/her approval, the system sends to the user associated with facet B the details of facet C and invites him/her it to send a connection request with facet C to the associated user;
- the user associated with facet C can then accept of reject the establishment of the connection.

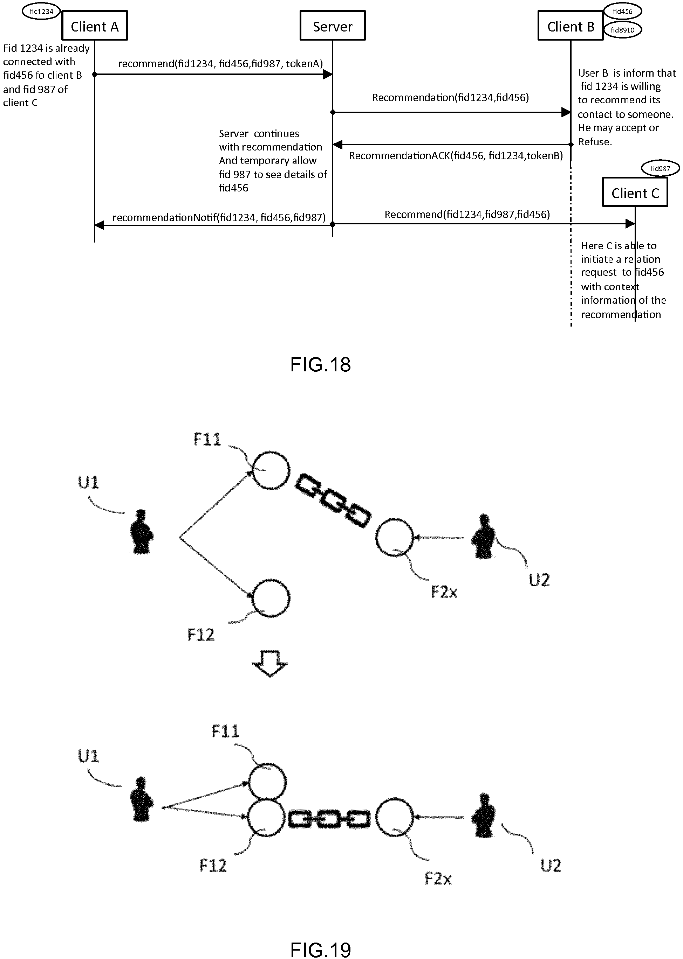

The corresponding interactions are illustrated in Figure 18.

### I) Promotion of connections

### a) Facet promotion

Referring now to Figure 19, the system allows the 'promotion' of an existing connection from a facet to another one. The promotion is a mechanism for migrating the established connection a given user U1 has on a facet F11 with a facet F2x of another user U2, from the currently connected facet F11 to another facet F12 of said user U1. Preferably, such promotion is performed without user U2 having to do anything, and without said user U2 being able to refuse such promotion.

Seen from user U2, the promotion appears as if one of the facets connected to one (F2x) of his facets is switched to another one (F11 to F12).

After this switch, user U2 has access to the features of the switched-in facet F12 of user U1, including visibility settings, and will no longer be able to see further changes in the switched-out facet F11 he was previously connected to.

Preferably, upon facet promotion, the system stores a snapshot of the switched-out facet F11 (including visible facet features) at the time the switching took place. This storing can be performed at client device level and/or at server level.

Facet promotion allows each user to freely organize his/her relations and interest at will, easily controlling what information is exposed to each connected facet and thus to each associated user.

For instance, with two users connected through general facets but interacting mainly for gaming, each can switch to his/her respective gamer facet.

The user of the 'promoted' facet F2x is notified with the promotion, and still has access to the history of changes of the previous facet. He/she does not have any specific action to accomplish to have the promotion achieved, nor can he/she reject it.

Compared to state-of-the-art network systems, this is an important improvement as it gives each user full control on his part of the relation with other users, whereas in previous system this would require creating a new connection with the agreement of both parties and then destroying the previous connection.

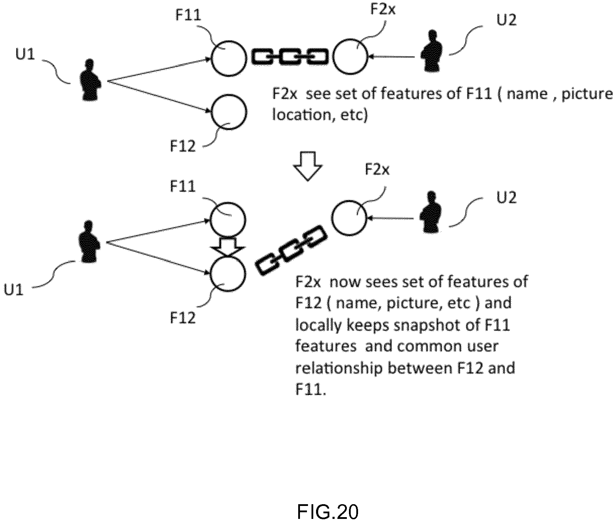

Figure 20 illustrates the facet promotion as perceived by user U2. The latter sees one of his connected facets becoming another connected facet with a new set of personal data (features), and no longer holds a connection with the former facet. His/her client device (and possibly the server) will store a record of the previous facet data.

In a particular embodiment, the steps of facet promotion are as follows:
- user U1 browses the list of other users' facets associated to a given facet (*originFacet*);
- he selects one of the facets of said list *(promotedFacet,* i.e. facet F2x) and selects a 'promotion' button;
- the client application of user U1 prompts the latter with the list of other existing facets of user U1;
- user U1 selects one of these facets (*destinationFacet*), i.e. facet F12).
- the application connects to the server with *originFacet* (F11), *destinationFacet* (F12), and *PromotedFacet* (F2x);
- the server notifies the promotion to the application on the client device of user U2;
- the application of user U2 updates the connection from F11 to F12 and stores an history of the previous connection between F2x and F11.

### b) Facet join-promotion

It may happen that a given user has established several connections to the same facet of another user through two or more of his facets. As seen from the facet of the other user, it is not possible to detect whether the two or more facets correspond to the same user or to different users.

The given user may then decide to apply a "join promotion" to the connection of the other user by selecting one of his connected facets as the main facet, and by disconnecting the other facet.

Prior to the join operation, each facet appears as belonging to potentially different users from the other side. The join-promotion allows grouping them and letting the other user know that they are from the same user.

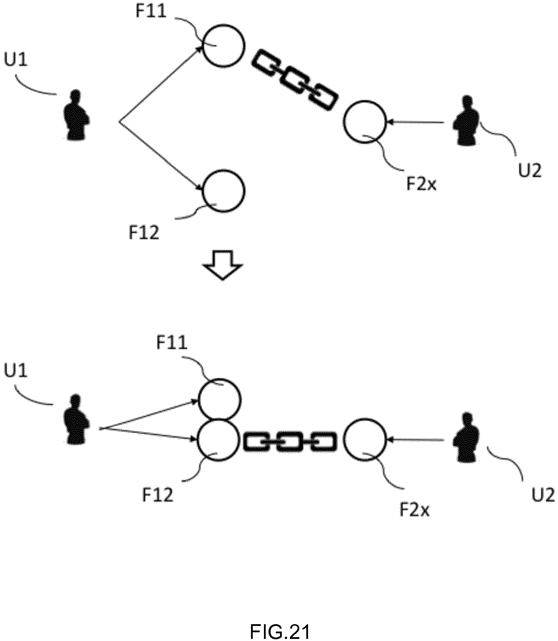

Figure 21 illustrates the join promotion process: a given user U1 is join-promoting facets F1A and F1 B to facet F2x of other user U2.

After the join-promotion (bottom part of the Figure), the facet F2x of the other user U2 sees one single facet (here F11) of user U2, and the list of facets connected to facet F2x is been decreased by one).

Like for the standard promotion, the other user U2 is only informed of the join-promotion and has no action to perform, nor can he/she reject the promotion.

In an exemplary embodiment, the steps are as follows:
- user U1 sees while displaying the information of a given connected facet F2x (*promotedFacet*) on his/her client device application that he/she is in connection with said facet using several of his/her facets (here facets F11 and F12); user U1 selects among the list of facets the facet that should become the main facet (argument *destinationFacet,* here F11) of the join and one or several other facets to join (argument *FacetTojoin,* here F12);
- application of user U1 connects to the server with the arguments *destinationFacet* (F11), the list of *FacetTojoin* (F12) and *promotedFacet* (F2x);
- server removes the connection with the facet(s) designated by argument *FacetTojoin* (here F12), maintains connection with the facet designated by *destinationFacet* (here F11) and notifies the join promotion to the application of user U2 reached via facet F2x;
- application of user U2 updates facet F2x connections list also stores the history of exchanges between facet F2x and facet F12 as well as a snapshot of features of F12.

### c) Facet self-promotion

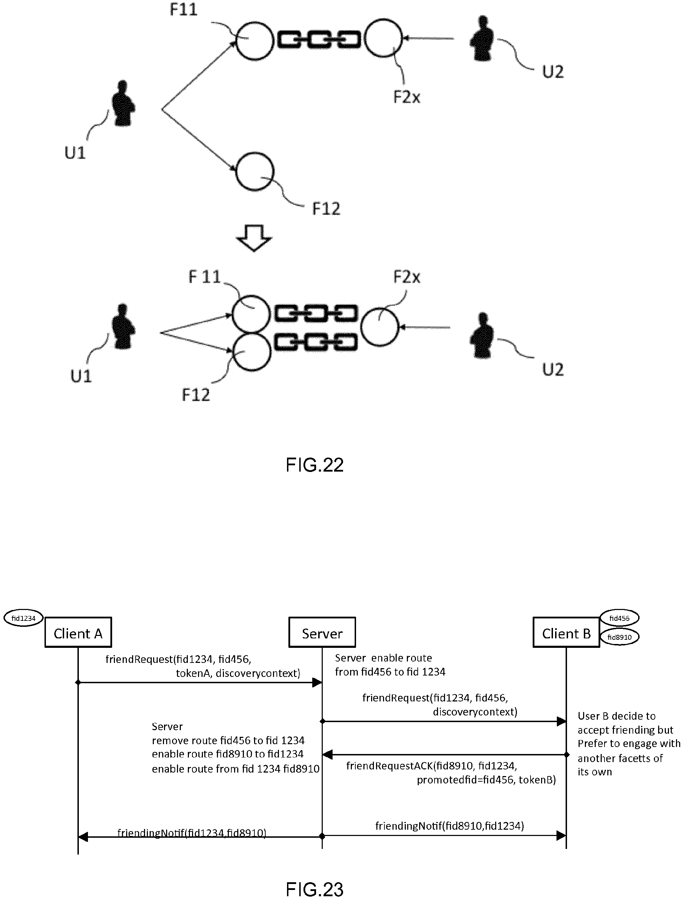

Referring now to Figure 22, a user U1 may also want to expose another of his/her facets (F12) to another user's facet (F2x) with which connection is already established through a facet F11.

User U1 can send a connection request from facet F12 to facet F2x of user U2, also making the latter aware that both F11 and F12 are associated to the same user. User U2 can accept or reject the request. If accepted, an additional connection between facets F12 and F2x is generated, with the particularity that application of user U2 has stored the fact that facets F11 and F12 have the same user behind, for appropriate display to user U2.

A possible implementation comprises the following steps:
- user U1 browses the list of other users' facets (including facet F2x) associated to facet F11 (*originFacet*);
- user U1 selects facet F2x (*relationFacet*) in said facet list and then selects a 'self-promote' button;
- application of user U1 prompts the latter with the list of his/her own facets;
- user U1 selects facet F12 *(selfpromotedFacet).*
- application of user U1 connects to the server with the arguments *originFacet, selfpromotedFacet,* and *relationFacet;*
- server notifies the self-promotion connection request to the application of user U2;
- application of user U2 prompts the self-promotion of connected facet F11 to additional facet F12 and user U2 can accept or reject the self-promotion; in case of acceptance, a new connection between facets F12 and F2x is generated, and application of user U2 stores the fact that facets F11 and F12 are from the same user.

### d) Facet promotion during initial facet connection

In the course of establishing a connection, a requester facet transmits a connection request to a requestee facet, for approval by the user owning the latter. Said user can then accept or reject the connection establishment, as described above.

An expanded feature consists in agreeing to the connection and at the same time promoting a facet. For instance, the requestee can agree on the establishment of a connection, not on the targeted requestee facet but on another facet of the requestee.

A possible embodiment of the corresponding interactions is illustrated in Figure 23.

### J) Nearby communications and standalone operations

The application run on a client device can also accomplish certain of its functions (e.g. a one-to-one communication, the acceptance of a connection request, the transmission of messages, the discovery of profile information) with applications of other client devices located in receiving range of an available nearby communication protocol (such as Wi-Fi direct, LTE-direct, Bluetooth etc.), without the need of a network communication with the system server. This can happen for example inside a building, underground, in an airplane, on a train, in the subway, etc.

Once such nearby interactions are performed, they are stored in the client device and later synchronized with the server, once connection therewith is available.

In another variant, a plurality of client devices located in the same area can be used for generating a mesh network allowing messages to be routed from one client device to another one through one or several of the other devices participating in the mesh network.

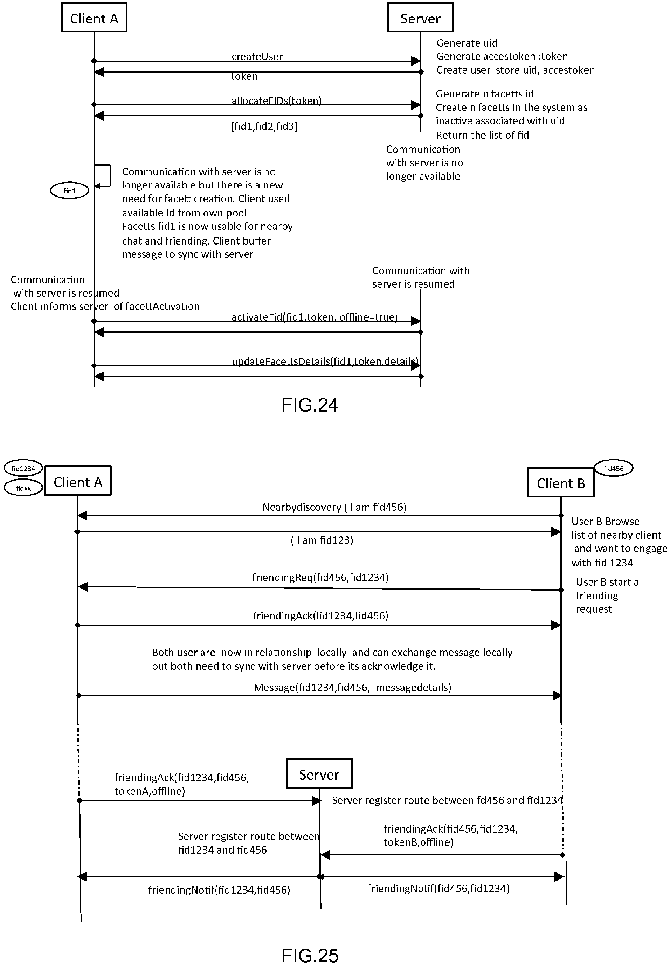

Figures 24 to 26 are examples of interactions in nearby communications or standalone modes.

More particularly, Figure 24 illustrates the operation of generating a new facet at the client device, while disconnected from the server (but after having obtained from the server a number of spare facet IDs), and later syncing with the server.

Figure 25 illustrates the sequence of connection establishment in a nearby communication mode, while both Client A and Client B are disconnected from the server, and later syncing with the server.

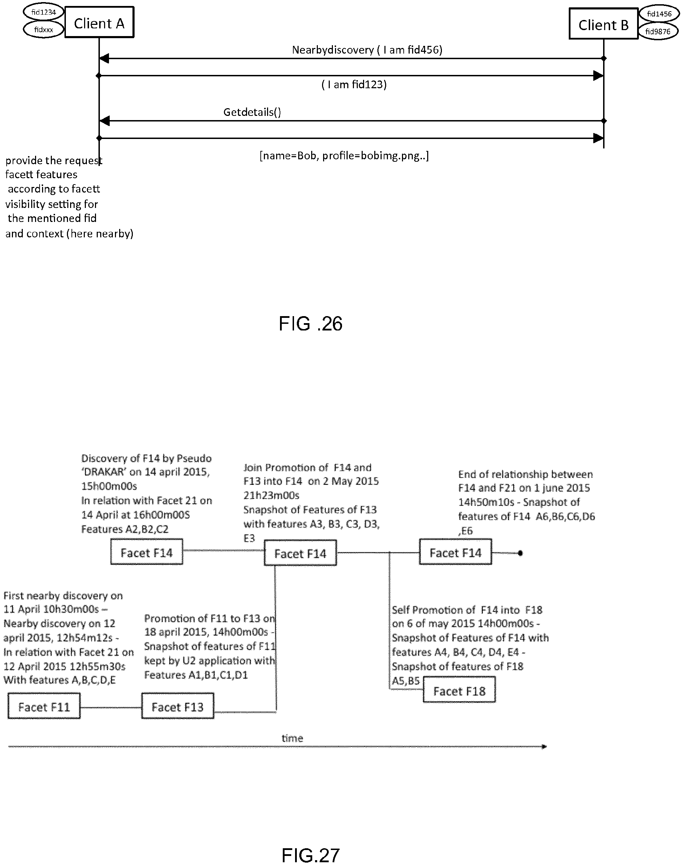

Figure 26 shows the interactions between Client A and Client B in relation to a facet disclosure in nearby communications mode.

### K) Example of facet connection changes

Turning now to Figure 27, a practical example of how facets are discovered, how facet connections are established and how promotions, join-promotions and self-promotions impact the way two users U1 and U2 are connected through their facets, as seen from a facet e.g. F21 or user U2.

A facet F11 of user U1 is first discovered and a connection between F21 and F11 is established at a certain time. Then U1 causes promotion from facet F11 to Facet F13 causing facet 21 to become connected to facet F13.

But in the meantime, facet F21 of user U2 discovered another facet F14 of user U1, ignoring at that time that Facets F11 and F14 were associated to the same user.

U1 later causes join-promotion of facets F13 and F14, F14 remaining connected to facet F21 as the main facet.

Still at a later stage, U1 causes self-promotion of facet F18, both facets F14 and F18 being then connected with facet F21. After that step, U1 or U2 cause the end of the connection between F21 and F14, users U1 and U2 being from then connected through facets F21 and F18.

Of course, much more complex evolutions of facet connections can be faced when both users generate the various kinds of described promotions.

### L)User data location and backup

Most or all of user data and information is stored in the associated client device, which allows for the application to fully operate in a non-connected mode, as explained above. More particularly, the client device system stores all that is needed to perform basic operations and to allow facet discovery.

Further, the system may rely on a dedicated syncing server, operated by the system or by a third party, to back up and restore at will all personal data and information involved in the system. This can be implemented e.g. through an incremental encrypted back-up using user credentials not owned nor known by the system server.

### M) Guest access

The system optionally provides a guest access for persons that are not yet users of the service, so as to allow them to have limited interaction with system users.

More particularly, users owning a facet that is discoverable by a public pseudo can be reachable by guest access, systematically or on demand.

The guest access involves using a predetermined URL such as www.facets.me/'pseudo' in a web browser; which opens a web-based chat session that allows communications through text /image /VoIP with the given facet that is discoverable through this public pseudo.

When accessed via such an URL, the server generates and stores, only at server level, a guest user with an appropriate facet whose communications are restricted to said given facet associated to this public pseudo.

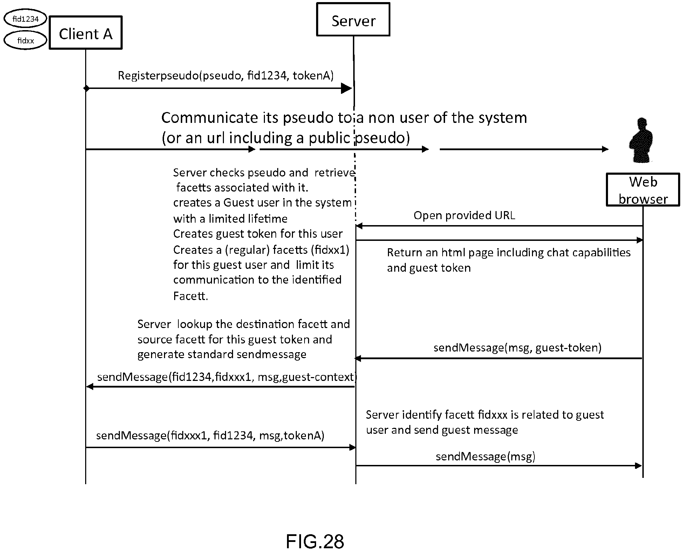

Figure 28 illustrates an exemplary implementation of the interactions between a client device (Client A), the server and a non-registered user through a web browser, for this purpose of guest access.

### N) Use cases of the invention

### a) Facet for places and brands

The use of facets can be extended to others entities than users, such as physical places (e.g. retail stores, restaurants, monuments, museums, shopping malls, etc.), brands or companies, users of these facets then acting on behalf of these entities.

### a1) Places

Using facets, a place owner can keep track of every facet shown by a client device that is located nearby or has been located nearby. This allows e.g. a manager of the place to easily communicate with people who have been interacting with the place, without needing anyone to disclose any personal information.

This also provides a way of promoting a place to a large set of people, although restricted to the ones who have been in the area, and enabling the implementation of targeted advertisement systems such as couponing, loyalty cards, etc.

In this context, the present invention is also capable of providing dedicated statistics both globally and individually (duration of visits, number of visits, etc.), while preserving the control of information disclosure by each user. The present invention can further provide additional features and functions such as extended connection possibilities, e.g. ability to contact facets that have interacted with a given place but have not established a connection with a facet associated with the place, and to contact facets according to criteria derived from the statistics.

An application dedicated to a given place can be run on a dedicated device that is constantly staying in said place, the device being either a standard terminal such as a smartphone or connected tablet, or a dedicated piece of hardware having appropriate communication capabilities and secured to the place.

### a2) Brands

The system of the invention also allows for brands, organizations, companies, etc. to create connections with users that never engage with them before due to the high 'cost' of previous solutions that always imply giving to much information. facets enable people to engage with brand in a safe an 'acceptable' manner and allows brand to extend its reach beyond its fan-boy base to its day-to-day customers.

Brands and companies can also appear as 'brand users' with associated facets, so that an individual user can engage with them, users can then lookup for brands or be recommended brands by their relations.

### b) Matching and dating

The present invention has the advantages of (i) lowering the barrier for communication, (ii) providing an acceptable way of broadcasting some limited-content profile in a nearby communications scheme, and (iii) automatically detecting facets located nearby. It thus allows creating in a very straightforward manner a matching/dating service between people that cross each other's path or have been interacting together at a given location.

### c) Micro ephemeral network

The present invention further enables also the creation of an ephemeral network with no-string attached.

For example people who meet at a certain event may wish to interact locally by messaging and then part.

The facet service according to the present invention, in which people can create a facet for the occasion, meet and engage with people in a snap, and then delete the facet to break forever the links created, ensures a very easy and efficient implementation of such use.

### d) Messaging burner

As the system of the present invention allows easy generation of dedicated facets, adjustment of their exposure to third parties and their deletion, it can be used very appropriately as a messaging burner, with zero-trace of the exchanges between facets once deleted.

## Claims

1. A user network system, the network being for establishing one-to-one or group connections between users, comprising a plurality of client devices (Client A, Client B) associated with respective users and a network server (Server) accessible by said client devices for allowing communications between users, **characterised in that** it comprises:
- network management means at said network server,
- means for generating and storing user facets (Fmn) containing selected user features defined user-by-user,
- means for associating to each user facet a unique facet ID (FIDmn, fid),
- means for linking each facet ID of a given user with a corresponding unique user ID at said network management means in a non-traceable manner for users,
- means for initiating and establishing connections between users only through said user facets (Fmn) and said facet IDs.

2. A system according to claim 1, further comprising facet discovery means for selectively exposing a given facet (Fmn) to the client devices of other users for the purpose of establishing connections between user facets.

3. A system according to claim 2, further comprising means for creating minimal content user facets with predefined facet features.

4. A system according to any one of claims 2 and 3, further comprising means for selectively associating to a given user facet to be discovered context-based information derived from existing connections of the associated user with other users in external connection systems.

5. A system according to claim 2, wherein said facet discovery means comprise means for broadcasting a selected facet to locally connected client devices.

6. A system according to any one of claims 1 to 5, further comprising means provided at said network management means for allocating spare facet IDs to users and providing them to associated client devices, and means provided in said client devices for off-line generation of a facet using a spare facet ID (Fig. 24).

7. A system according to any one of claims 1 to 6, further comprising means for establishing facet connections between locally-connected client devices, and means for synchronizing facet connection data with said network management means when said devices are later connected to said network server (Fig. 25).

8. A system according to any one of claims 1 to 7, comprising facet connection management means allowing a given user to request the switching of an established connection between one the associated user facets and another user's facet to a connection between another of said associated user facets and said another user's facet (Fig. 19).

9. A system according to claim 8, further comprising storing in said another user's client device connection history information including information associated with the removed connection between said one the associated user facets and said another user's facet.

10. A system according to any one of claims 8 and 9, wherein said facet connection management means further comprise means for grouping connections between two facets associated to one same user with another user facet to only one of said two facets only (Fig. 21).

11. A system according to any one of claims 8 to 10, wherein said facet connection management means further comprise means allowing a given user currently connected through one facet to another user's facet to request a new connection with said another user's facet through another facet associated with said given user, said request containing context information including the existence of said current connection (Fig. 22).

12. A system according to any one of claims 1 to 11, comprising facet connection management means allowing a given user, receiving a connection request on one facet of said given user from another user's facet, to request a connection with said another user's facet through another facet associated with said given user (Fig. 23).

13. A system according to any one of claims 1 to 12, further comprising browser-based means for connecting to said network server and creating a server-managed, unregistered facet for selective connection with other users facets via a browser (Fig. 28).

14. A system according to any one of claims 1 to 13, further comprising means for establishing location-based connections between user facets associated with a plurality of client devices and a location-specific facet of another client device associated to the location, and to the vicinity of which said plurality of client devices are located, and means for broadcasting messages from said location-specific facet to the user facets having location-based connection therewith.

15. A system according to any one of claims 1 to 14, further comprising means for generating temporary user facets for the purpose of ephemeral instant messaging, and means for deleting exchanged messages with a temporary user facet in response to facet deletion.
